# EUROPEAN PATENT SPECIFICATION

(11) **EP 1 622 417 B1**
(45) Date of publication and mention of the grant of the patent: **11.07.2007**
(21) Application number: 04022394.3
(22) Date of filing: 21.09.2004
(51) Int. Cl.: H04R 1/10, H04M 1/60

(54) **External loudspeaker with magnetic shield for mobile phone**
Externer Lautsprecher mit magnetischer Abschirmung für ein Mobiltelefon
Haut-parleur externe avec écran magnétique pour téléphone mobile

(30) Priority: 28.07.2004 KR 2004059336
(43) Date of publication of application: 01.02.2006
(73) Proprietor: Sambu Communics Co., Ltd., Namdong-gu, Incheon 405-100 (KR); Kim, Ju Yeon, Yongsan-gu, Seoul 140-030 (KR)
(72) Inventor: Kim, Ju Yeon, Yongsan-gu, Seoul 140-030 (KR)
(74) Representative: Munk, Ludwig

(56) References cited:
- WO-A-20/04002189
- US-A1- 2001 041 543
- US-A1- 2002 153 193
- US-B1- 6 289 100
- PATENT ABSTRACTS OF JAPAN vol. 2000, no. 14, 5 March 2001 (2001-03-05) -& JP 2000 325880 A (TOKIN CORP), 28 November 2000 (2000-11-28)

## Description

### Technical Field

The present invention relates, in general, to external speakers for mobile phones, intended to prevent malfunction of a mobile phone caused by a leakage magnetic field. More particularly, the present invention relates to an external speaker for mobile phones, which allows a user to make a call without the necessity of holding a mobile phone to his/her ear, and prevents malfunction of the mobile phone, such as call interruption, due to a leakage magnetic field.

### Background Art

Generally, folding-type mobile phones or bar-type mobile phones enable people to make calls, regardless of time or place. However, when a person desires to talk to another person via a mobile phone, the person must hold the mobile phone near his/her ear. Thus, the person must hold the mobile phone with one hand while calling, in a manner similar to the traditional telephone.

In order to solve the inconvenience, hands-free mobile phones were developed. The hands-free mobile phones are advantageous in that it is unnecessary to hold a mobile phone with one hand when making a call. However, the hands-free mobile phones have a problem in that it is impossible for people other than two parties participating in a call to listen to the call.

In order to overcome this problem, a product has been researched and developed, which is constructed so that an external speaker with high output is separately provided, and connected to a mobile phone to make a call. However, the product has a problem in that a leakage magnetic field leaking from a magnet provided in the external speaker affects a hall sensor provided in the mobile phone, so that call interruption may occur during calling.

In a detailed description, in the case of the folding-type mobile phones, a hall sensor and a magnet are positioned to correspond to each other. Thus, as a person opens or closes the mobile phone without manipulating the mobile phone's keys, the mobile phone is automatically switched to call mode or wait mode. That is, when a magnetic force of the magnet acts on the hall sensor, the mobile phone is switched to wait mode. Conversely, when the magnetic force of the magnet does not act on the hall sensor, the mobile phone is switched to call mode. In other words, when the magnet corresponding to the hall sensor or other external entities apply magnetic force to the hall sensor, a call is automatically interrupted. Of course, the mobile phone may be set so that the mode of the mobile phone is switched to call mode or wait mode only when a particular key is manipulated.

When a person makes a call using both the external speaker and the folding-type mobile phone, the leakage magnetic field leaking from the magnet provided in the external speaker may act on the hall sensor of the mobile phone. In this case, although there is no external input, the hall sensor is operated, thus resulting in call interruption.

Document US 2001/041543 A1 discloses a flip-type mobile phone with an Hall-effect opening sensor.

Document US 2002/153193 A1 discloses magnetic shielding techniques for sound-reproducing devices located within a mobile phone.

Document WO 2004/002189 discloses an earphone specially adapted for use with a mobile phone.

### Disclosure of Invention

### Technical Problem

Accordingly, the present invention has been made keeping in mind the above problems occurring in the prior art, and an object of the present invention is to provide an external speaker for mobile phones, which allows a user to make a call without the necessity of holding a mobile phone to his/her ear, and prevents malfunction of the mobile phone, such as call interruption, due to a leakage magnetic field of the external speaker.

Another object of the present invention is to provide an external speaker for mobile phones, which is provided with a protective cap that is detachably coupled to the external speaker, thus protecting several elements including a connector that is mechanically and electrically connected to a mobile phone, when the external speaker is not in use, and allowing a user to easily store and carry the external speaker.

A further object of the present invention is to provide an external speaker for mobile phones, which is constructed so that a protective cap is detachably coupled to the external speaker by a hook fastening method, thus allowing the protective cap to be more conveniently detachably coupled to the external speaker.

### Technical Solution

In order to accomplish the above objects, the present invention provides external speaker for mobile phones, intended to prevent malfunction of a mobile phone caused by a leakage magnetic field, the external speaker including a tapered cylindrical casing which is tapered from a lower portion to an upper portion thereof, with a space defined in the casing to receive a speaker unit therein, a connector seating hole provided on an upper surface of the casing so that a connector is seated therein, and a voice outlet provided on a sidewall of the casing to emit sound output from the speaker unit; the connector seated in the connector seating hole of the casing so that a part of the connector is exposed to an outside, and detachably connected to a mobile phone mechanically and electrically; the speaker unit provided in the casing, and electrically connected to a voice output terminal of the mobile phone through the connector, thus outputting voice while calling; and a shielding plate provided in the casing to be positioned above and/or under the speaker unit, and containing the magnetic field leaking from the speaker unit

The casing includes an upper casing part having on an upper surface thereof the connector seating hole to allow the connector to be seated therein, with a support step provided on a lower portion of an inner surface of the upper casing part to support the speaker unit provided in the casing, and a shielding plate attached to an upper portion inside the upper casing part to be spaced apart from a top of the speaker unit at a predetermined interval; a middle casing part coupled to an outer edge of the upper casing part to communicate with the upper casing part, with a speaker support seat protruding inward from an inner surface of the middle casing part to support an outer edge of the speaker unit provided in the upper casing part; and a lower casing part coupled to an outer edge of the middle casing part to define the voice outlet for emitting sound between the lower casing part and the middle casing part, with a shielding plate attached to an inner surface of the lower casing part to be spaced apart from a bottom of the speaker unit at a predetermined distance.

According to the present invention, the voice transmitted from the mobile phone to the speaker unit is amplified to a predetermined level in the mobile phone, prior to being output

In the present invention, the shielding plate is a magnet to guide a flow of leakage magnetic field leaking from the speaker unit.

Further, the external speaker for mobile phones further includes a protective cap housing a hook unit that is detachably seated in a hook seating hole provided on the upper casing part, and having a connector fitting hole to receive a part of the connector exposed to an outside of the upper casing part.

According to the present invention, the protective cap includes a conical casing, with a button hole provided on a sidewall of the conical casing so that a push button of the hook unit is exposed to an outside through the button hole, and the connector fitting hole provided on a lower surface of the conical casing to receive the exposed part of the connector therein, and a connector support block for supporting the connector in the conical casing and hook support plates for supporting the hook unit, the connector support block and the hook support plates being horizontally provided on an inner surface of the conical casing at different heights; the hook unit installed between the hook support plates while surrounding the connector support block in such a way that a hook of the hook unit is exposed to the outside, the hook outwardly extending from an end of the hook unit to be seated in a hook seating hole on the upper casing part, the push button provided on a sidewall of the hook unit to allow a user to operate the hook unit, with spring support lugs provided on an inner surface of the hook unit to support a spring; and the spring provided between the spring support lugs of the hook unit so that the hook unit elastically opens outward.

In the present invention, a locking hole is provided on the upper surface of the upper casing part, and a locking protrusion is provided on the lower surface of the conical casing of the protective cap to be fitted into the locking hole.

Further, the conical casing of the protective cap has on an upper end thereof a structure to be coupled to fastening means.

### Advantageous Effects

The present invention enables a user to make a call through an external speaker without the necessity of holding a mobile phone to his/her ear, and prevents malfunction of the mobile phone, such as call interruption, due to a leakage magnetic field of the external speaker during calling.

Further, the present invention is provided with a protective cap which is detachably coupled to the external speaker, thus protecting several elements, including a connector that is mechanically and electrically connected to the mobile phone, when the external speaker is not in use, and allowing a user to conveniently store and carry the external speaker.

Furthermore, the present invention is constructed so that the protective cap is detachably coupled to the external speaker by a hook fastening method, thus allowing the protective cap to be more conveniently detachably coupled to the external speaker.

### Description of Drawings

FIG. 1 is a perspective view to show the state where a protective cap is coupled to an external speaker for mobile phones, according to the present invention;
FIGS. 2 and 3 are perspective views to show the external speaker for mobile phones and the protective cap to be coupled to the external speaker, according to the present invention;
FIG. 4 is an exploded perspective view to show the external speaker and the protective cap, according to the present invention;
FIG. 5 is a perspective view to show the state where the protective cap is coupled to the external speaker, and a part of the protective cap is cut away;
FIGS. 6 and 7 are sectional views to show the state where the protective cap is coupled to the external speaker, according to the present invention;
FIG. 8 is a perspective view to show the state where the external speaker is mounted to a mobile phone so as to make a call; and
FIG. 9 is a perspective view to show the mobile phone, the external speaker, and the protective cap, according to the present invention, when a user stores or carries the mobile phone, the external speaker, and the protective cap.

### Best Mode

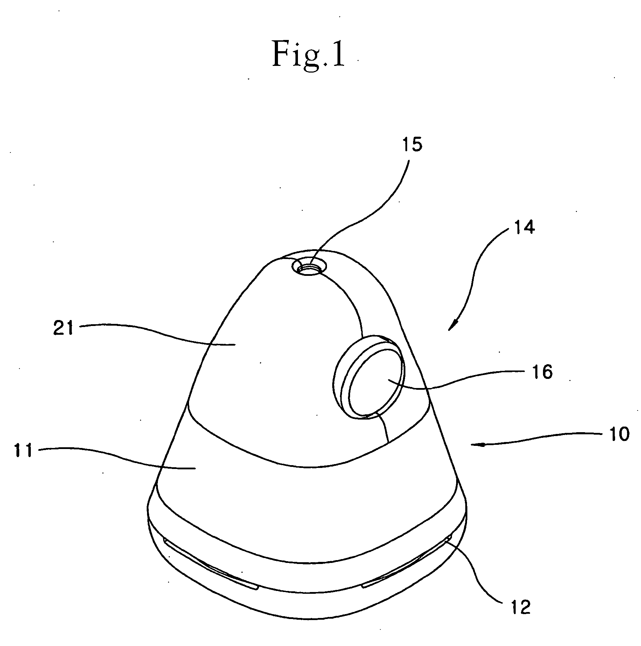

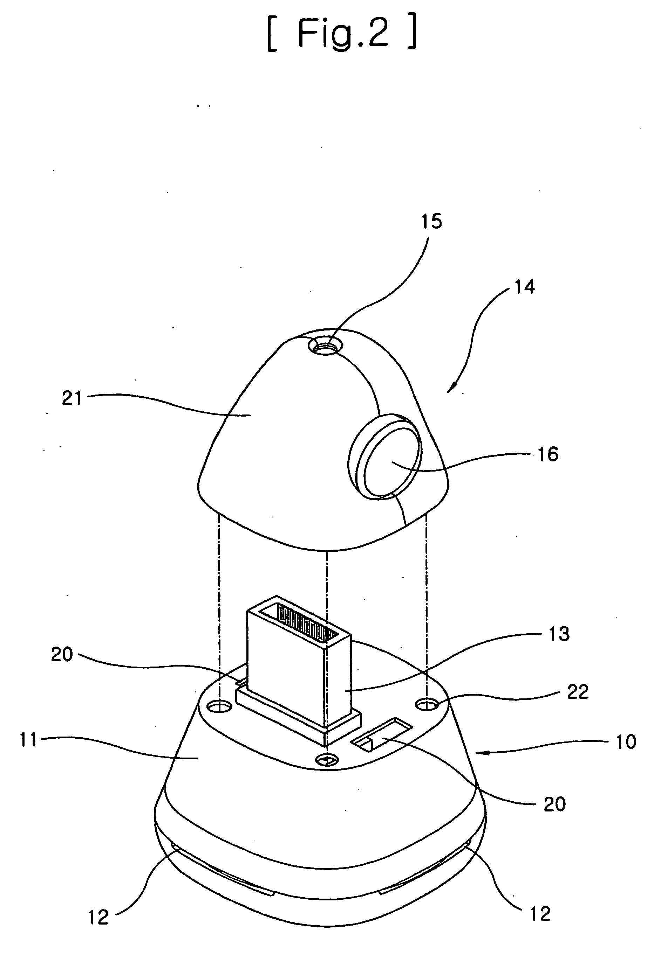

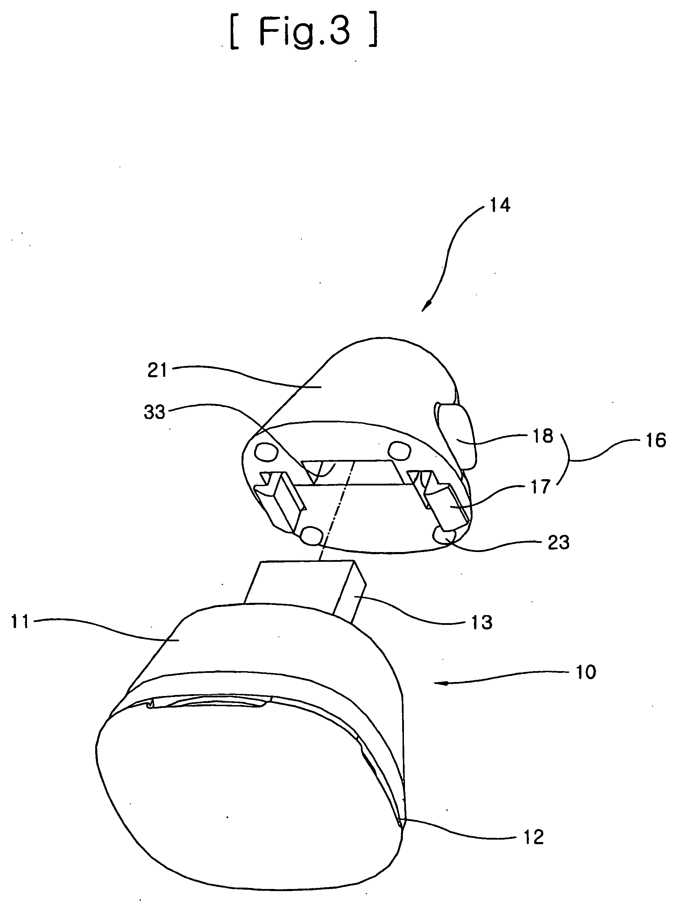

According to the present invention, an external speaker 10 for mobile phones is mechanically and electrically connected to a mobile phone (not shown), thus outputting the voice of the other party to the outside of the mobile phone. As shown in FIGS. 1 to 3, the external speaker 10 has a tapered cylindrical shape which is tapered from a lower portion to an upper portion thereof. A plurality of voice outlets 12 is provided on a sidewall of a casing 11 of the external speaker 10 to emit sound. A connector 13 is provided at an upper portion of the casing 11 so that a part of the connector 13 is exposed to the outside, and functions to mechanically and electrically connect the external speaker 10 to the mobile phone. Of course, the external speaker 10 may be constructed in various shapes without being limited to the cylindrical shape, as long as the external speaker 10 houses a speaker unit therein. Further, the voice outlets 12 may be provided on the bottom of the casing 11 as well as the sidewall of the casing 11.

A protective cap 14 is detachably coupled to the external speaker 10 to allow a user to conveniently store and carry the external speaker 10, and protects the connector 13 when the external speaker 10 is not in use. The protective cap 14 has a conical shape, with a screw hole 15 bored in the top of the protective cap 14 so that a fastening means, such as a screw, is tightened into the screw hole 15. Since the fastening means, such as the screw, is tightened into the screw hole 15 of the protective cap 14, it is possible to fasten an additional strap to the fastening means, thus allowing the external speaker 10 integrally coupled to the protective cap 14 to be stored and carried together with the mobile phone.

According to this embodiment, the screw is used as the fastening means for the protective cap 14. However, without being limited to this embodiment, a through hole may be horizontally formed through an upper portion of the protective cap 14. Subsequently, a strap or the like is fastened to the through hole by one of various fastening methods, thus allowing the external speaker 10 integrally coupled to the protective cap 14 to be stored and carried together with the mobile phone.

The protective cap 14 includes a hook unit 16 to be detached from the external speaker 10 using the hook unit 16. On an upper surface of the external speaker 10 are provided hook seating holes 20 to support the hook unit 16. Hooks 17 of the hook unit 16 protrude out from the bottom of the protective cap 14 to be inserted into the corresponding hook seating holes 20. Button holes 19 are provided on a sidewall of a casing 21 of the protective cap 14, and push buttons 18 are exposed to the outside through the corresponding button holes 19 to operate the hook unit 16 by external force.

According to this embodiment, the hook unit 16 is used as a means for detachably coupling the protective cap 14 to the external speaker 10. However, without being limited to this embodiment, the protective cap 14 may be detachably coupled to the external speaker 10 through various methods, such as a screw fastening method or a force-fitting method.

Further, a plurality of locking holes 22 is provided on an upper surface of the casing 11 of the external speaker 10, while a plurality of locking protrusions 23 is provided on the bottom of the casing 21 of the protective cap 14 to correspond to the locking holes 22. Thus, when the protective cap 14 is detachably coupled to the external speaker 10, the locking holes 22 and the locking protrusions 23 allow the protective cap 14 to be accurately aligned with the external speaker 10. Further, after the protective cap 14 is integrally coupled to the external speaker 10, the locking holes 22 cooperate with the locking protrusions 23 to prevent unexpected movement of the external speaker 10 and the protective cap 14 due to external force, thus preventing internal elements, such as the connector 13, from being broken or damaged.

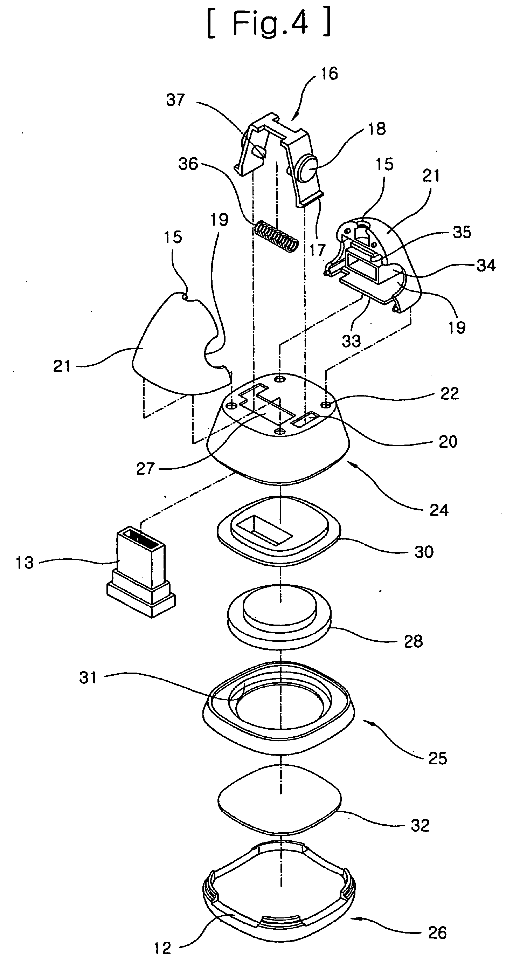

FIG. 4 is an exploded perspective view showing the external speaker 10 and the protective cap 14, according to the present invention. The casing 11 defines the external appearance of the external speaker 10, and has the tapered cylindrical shape which is tapered from the lower portion to the upper portion thereof. The casing 11 includes an upper casing part 24, a middle casing part 25, and a lower casing part 26 that sequentially combine.

The upper casing part 24 of the casing 11 is open at the bottom, and a connector seating hole 27 is provided on an upper surface of the upper casing part 24 such that the connector 13 is seated in the connector seating hole 27. Further, a plurality of support steps 29 is provided on a lower portion of an inner surface of the upper casing part 24 to have a predetermined height, thus supporting a speaker unit 28 installed in the casing 11. A shielding plate 30 consisting of a magnet is provided at an upper position inside the upper casing part 24 in such a way as to be spaced apart from the top of the speaker unit 28 which leaks a magnetic force, by a predetermined distance.

That is, a single magnetic field circuit is formed so that the magnetic force, which leaks from a magnet in the speaker unit 28 and affects a hall sensor in the mobile phone, is shielded by the shielding plate 30 so as to be fed back to the speaker unit 28, thus preventing malfunction of the hall sensor of the mobile phone due to the leakage magnetic field leaking from the magnet in the speaker unit 28. In other words, such a construction prevents call interruption caused by the leakage magnetic field leaking from the magnet in the external speaker 10 when the external speaker 10 is not in use.

As described above, the upper casing part 24 has the hook seating holes 20 to receive the hooks 17 of the hook unit 16 therein. Further, a partition wall 39 is mounted to the inner surface of the upper casing part 24, through a thermal fusion method or the like, to be spaced apart from the hook seating holes 20 by a predetermined interval. The partition wall 39 secures space for receiving the hooks 17 of the hook unit 16, and also allows the shielding plate 30 to be attached to the upper casing part 24 while being spaced apart from the speaker unit 28 by the predetermined distance.

The middle casing part 25 of the casing 11 is coupled to an outer edge of the upper casing part 24 to communicate with the upper casing part 24. A speaker support seat 31 protrudes inwardly from an inner surface of the middle casing part 25 to support an outer edge of the speaker unit 28 provided in the upper casing part 24.

In other words, after the speaker unit 28 is installed in the upper casing part 24, the middle casing part 25 is coupled to the outer edge of the upper casing part 24, so that the speaker unit 28 is located at a junction of the upper casing part 24 and the middle casing part 25.

A bottom of the lower casing part 26 of the casing 11 is formed to have a dome shape. The lower casing part 26 is coupled to an outer edge of the middle casing part 25 to define the plurality of voice outlets 12 for emitting sound between the lower casing part 26 and the middle casing part 25. Another shielding plate 32 is attached to an inner surface of the lower casing part 26 to be spaced apart from the bottom of the speaker unit 28 by a predetermined distance.

Similarly to the upper casing part 24, a single magnetic field circuit is formed so that a magnetic force, which leaks from the magnet in the speaker unit 28 and affects the hall sensor in the mobile phone, is shielded by the shielding plate 32 so as to be fed back to the speaker unit 28, thus preventing malfunction of the hall sensor of the mobile phone due to the leakage magnetic field leaking from the magnet in the speaker unit 28.

According to the embodiment, the shielding plates 30 and 32 for shielding the flow of the leakage magnetic field are mounted to the upper casing part 24 for covering an upper portion of the speaker unit 28 and the lower casing part 26 for covering a lower portion of the speaker unit 28, respectively. However, without being limited to this embodiment, the shielding plates may be installed at only a position where a magnetic force with polarity affecting the hall sensor of the mobile phone leaks.

The connector 13 is seated in the connector seating hole 27 of the upper casing part 24 so that a part of the connector 13 is exposed to the outside. The connector 13 is detachably connected to the mobile phone (not shown) mechanically and electrically, thus transmitting the voice of another party to the speaker unit 28. In this case, the connector 13 is electrically connected to the speaker unit 28 provided between the middle casing part 25 and the lower casing part 26.

Preferably, voice transmitted from the mobile phone (not shown) through the connector 13 to the speaker unit 28 is amplified in the mobile phone to a level sufficient to drive the external speaker 10, prior to being output.

Of course, a means for amplifying voice may be installed in the external speaker 10. However, such a construction is disadvantageous in that the size of the external speaker 10 is undesirably increased, and disadvantageous in that additional electric power must be supplied to the amplification means.

As described above, the hook seating holes 20 are provided on the upper surface of the upper casing part 24, and the hook unit 16 is installed in the protective cap 14 with a connector fitting hole 33 to receive the exposed part of the connector 13 therein. Therefore, the protective cap 14 is detachably coupled to the upper portion of the external speaker 10, thus protecting the external speaker 10 including the connector 13, and allowing a user to easily store and carry the external speaker 10.

The casing 21 defining the external appearance of the protective cap 14 is manufactured as follows. First, left and right parts of the casing 21 are individually manufactured, and then integrated with each other in the conical casing. Two button holes 19 are provided on the sidewall of the casing 21 opposite to each other, so that the push buttons 18 are exposed to the outside through the button holes 19. Further, the connector fitting hole 33 is provided on a lower surface of the casing 21 to receive the exposed part of the connector 13. Connector support blocks 34 for supporting the connector 13 in the casing 21 extend horizontally from both sides of the inner surface of the casing 21 so that the connector support blocks 34 face each other and are adjacent to each other while being spaced apart from each other at a predetermined interval. Hook support plates 35 for supporting the hook unit 16 are located at a different height than the connector support blocks 34, and horizontally extend from both sides of the inner surface of the casing 21 so that the hook support plates 35 face each other and are adjacent to each other while being spaced apart from each other at a predetermined interval.

Intervals of the connector support blocks 34 and the hook support plates 35 are determined according to a thickness of the connector 13 and a width of a top wall of the hook unit 16, respectively.

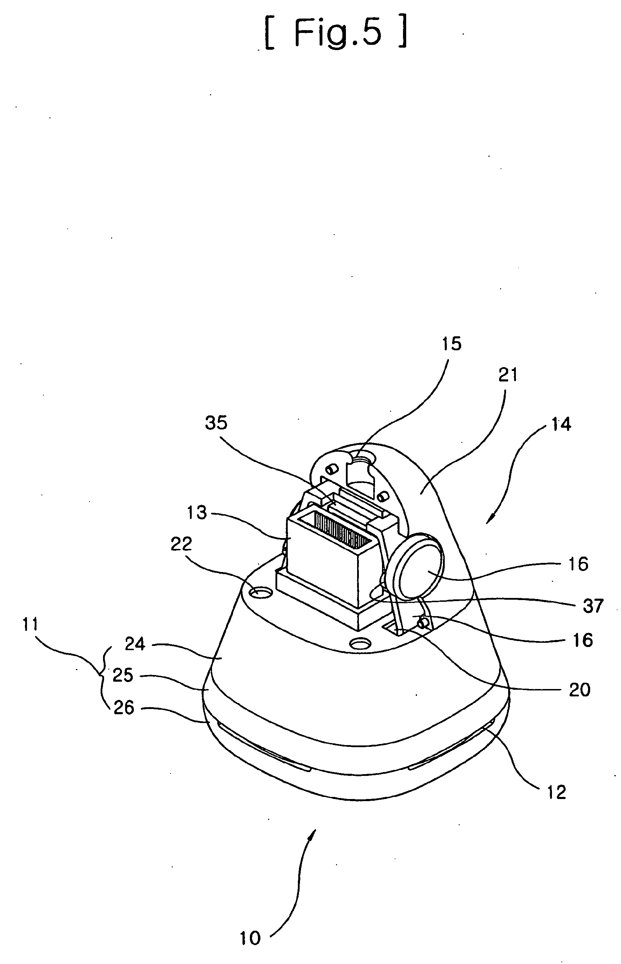

The construction of the hook 16 provided in the casing 21 is as follows. That is, the hooks 17 extend outward from a lower end of the hook unit 16 to be seated in the hook seating holes 20 of the upper casing part 24. The push buttons 18 are provided on a sidewall of the hook unit 16 to allow a user to operate the hook unit 16. Further, spring support lugs 37 are provided on an inner surface of the hook unit 16 opposite to each other, thus supporting a spring 36. As shown in FIG. 5, the hook unit 16 is installed between the hook support plates 35 while surrounding a connector support block 34, in such a way that the hooks 17 are exposed to the outside.

In this case, the hook unit 16 itself may be made of an elastic material to have elasticity. Further, it is preferable that the spring 36 be positioned between the spring support lugs 37 provided on the inner surface of the hook unit 16 so that the hook unit 16 elastically opens outward.

### Mode for Invention

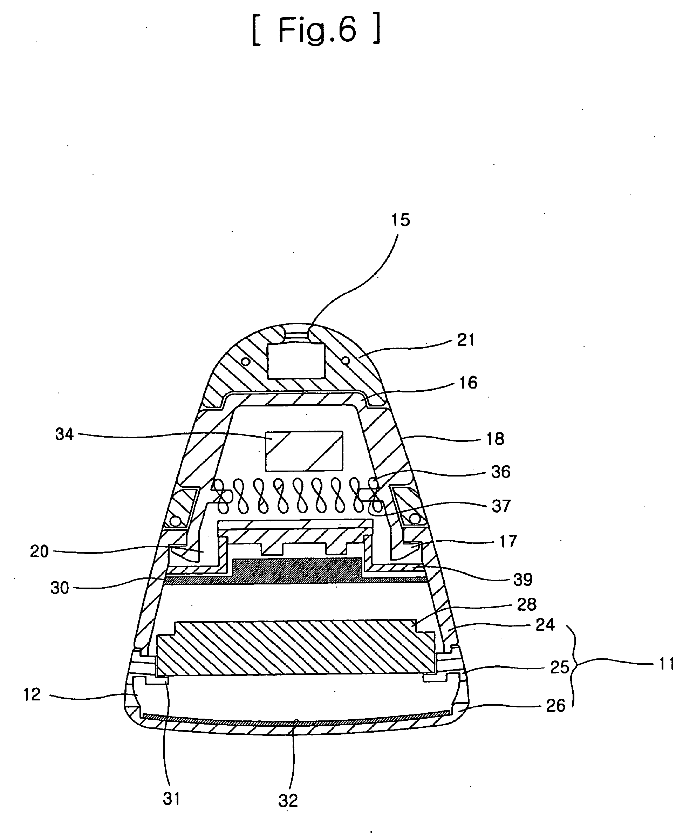

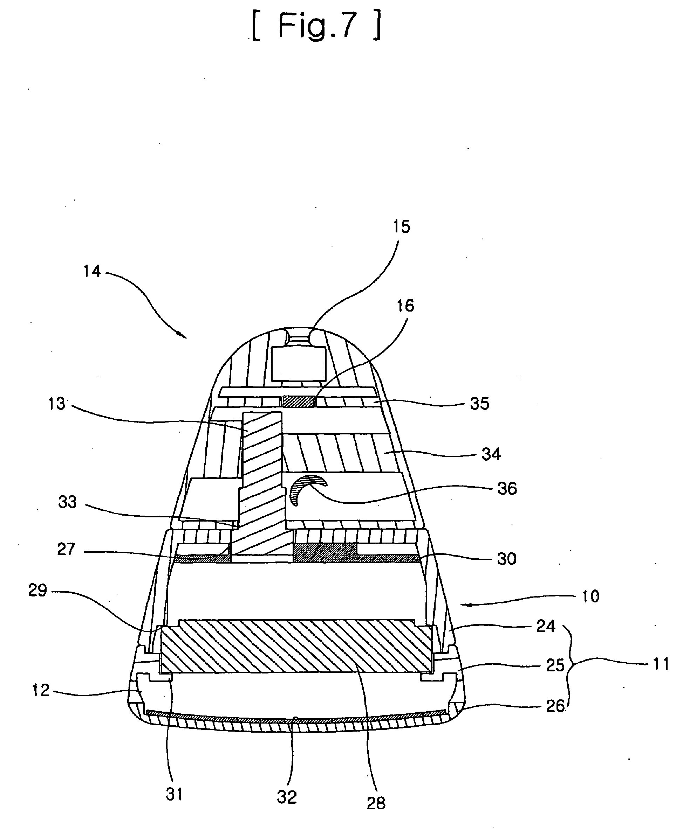

FIGS. 6 and 7 show the state where the protective cap 14 is coupled to the external speaker 10. First, the protective cap 14 is placed on the external speaker 10 so that the hooks 17 of the hook unit 16 are aligned with the hook seating holes 20. Next, when pressing the protective cap 14, the hooks 17 of the hook unit 16 are seated in the hook seating holes 20, and thereby, the external speaker 10 is integrated with the protective cap 14 into a single structure. At this time, the exposed part of the connector 13 of the external speaker 10 is fitted into the connector fitting hole 33 of the protective cap 14, thus keeping the connector 13 safe.

The coupling of the hooks 17 of the hook unit 16 to the hook seating holes 20 is maintained by both the elasticity of the hook unit 16 and the elasticity of the spring 36. Thus, although an external force is applied to the external speaker 10 and the protective cap 14, the protective cap 14 is not unexpectedly separated from the external speaker 10.

Conversely, when the push buttons 18 of the hook unit 16 are pushed in the state where the hooks 17 of the hook unit 16 are seated in the hook seating holes 17, the hooks 17 of the hook unit 16 move inward, and are simultaneously removed from the hook seating holes 20. Thereby, the protective cap 14 is separated from the external speaker 10.

Further, the push buttons 18 exposed through the button holes 19 of the casing 21 are constructed to be on a same plane with the surface of the casing 21, thus preventing an unexpected external force to act on the push buttons 18, and thereby preventing the protective cap 14 from being unexpectedly detached from the external speaker 10.

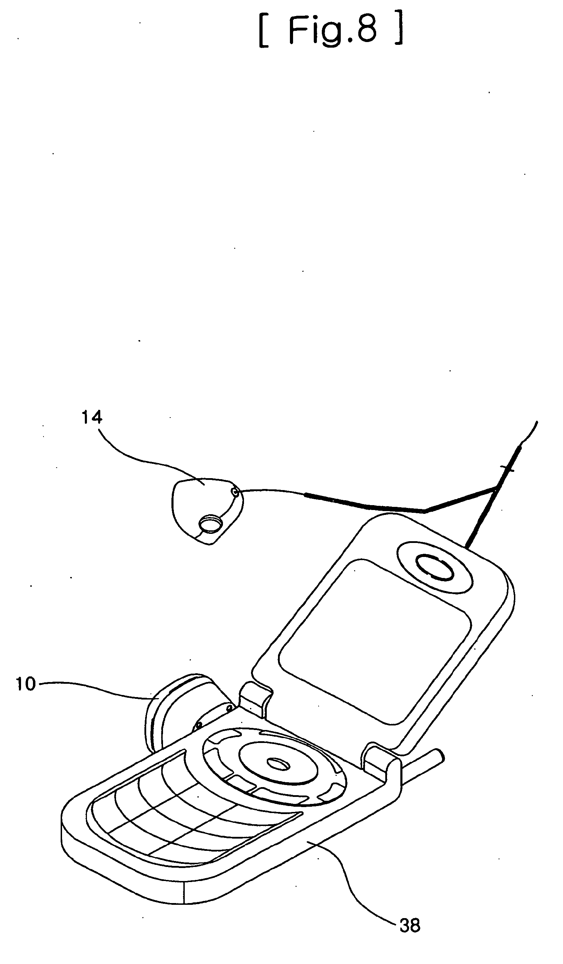

FIG. 8 shows the state where the external speaker 10 is mounted to a mobile phone 38 so as to make a call. Voice amplified to a predetermined level in the mobile phone 38 is output to the outside through the external speaker 10, thus allowing a user to make a call without the necessity of holding the mobile phone 38 to his/her ear.

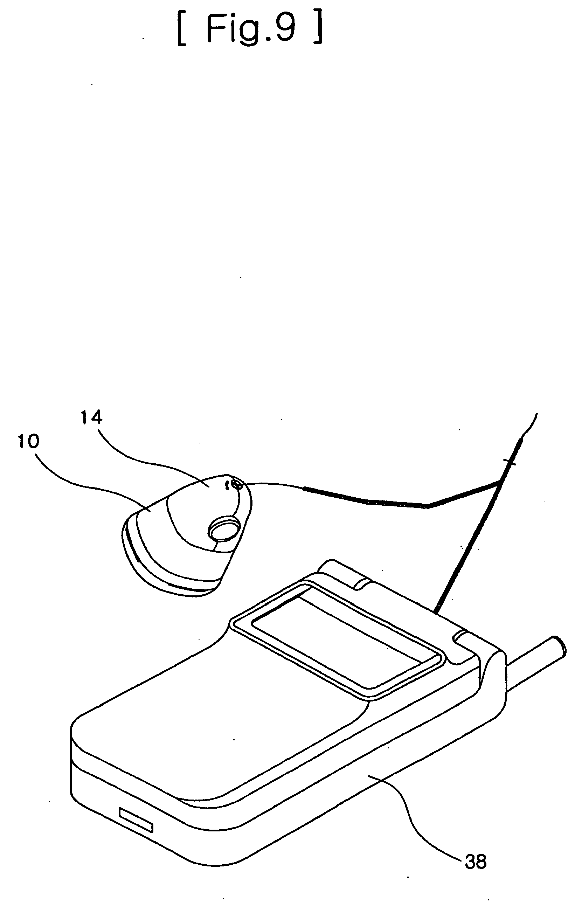

FIG. 9 shows the mobile phone 38, the external speaker 10, and the protective cap 14 that are integrally coupled to each other when a user stores or carries them. The present invention allows a user to easily store or carry the external speaker 10 and the protective cap 14 together with the mobile phone 38. Further, when the user desires to make a call, the present invention enables the user to easily separate the external speaker 10 from the protective cap 14 and then mount the external speaker 10 to the mobile phone 38, regardless of time or place.

Of course, a user can make a call without mounting the external speaker 10 to the mobile phone 38. In this case, the magnetic field leaking from the magnet of the speaker unit installed in the external speaker 10 is shielded by the shielding plates, so that the magnetic field does not leak to the outside. Thereby, the leakage magnetic field does not affect operation of the hall sensor of the mobile phone, thus avoiding call interruption when calling.

### Industrial Applicability

As described above, the present invention provides an external speaker, which can be used along with a terminal for mobile communications, for example, a mobile phone, and can amplify the other party's voice, thus allowing a mobile phone for individual use to be used for a conference call or a multiparty call.

## Claims

1. An external speaker for mobile phones, intended to prevent malfunction of a mobile phone caused by a leakage magnetic field, comprising:
- a casing **(11)** which is tapered from a lower portion to an upper portion thereof with a space defined in the casing to receive a speaker unit **(28)** therein;
- a connector seating hole **(27)** provided on an upper surface of the casing so that a connector **(13)** is seated therein, and a voice outlet **(12)** provided on a sidewall of the casing to emit sound output from the speaker unit;
- the connector **(13)** seated in the connector seating hole of the casing so that a part of the connector is exposed to an outside, and detachably connected to a mobile phone mechanically and electrically;
- the speaker unit **(28)** provided in the casing, and electrically connected to a voice output terminal of the mobile phone through the connector, thus outputting voice while calling; and
- a shielding plate **(30, 32)** provided in the casing to be positioned above and/or under the speaker unit, and shielding from the magnetic field leaking from the speaker unit

2. The external speaker for mobile phones according to claim 1, wherein the casing comprises:
an upper casing part having on an upper surface thereof the connector seating hole to allow the connector to be seated therein, with a support step provided on a lower portion of an inner surface of the upper casing part to support the speaker unit provided in the casing, and a shielding plate attached to an upper portion inside the upper casing part to be spaced apart from a top of the speaker unit at a predetermined interval;
a middle casing part coupled to an outer edge of the upper casing part to communicate with the upper casing part, with a speaker support seat protruding inward from an inner surface of the middle casing part to support an outer edge of the speaker unit provided in the upper casing part; and
a lower casing part coupled to an outer edge of the middle casing part to define the voice outlet for emitting sound between the lower casing part and the middle casing part, with a shielding plate attached to an inner surface of the lower casing part to be spaced apart from a bottom of the speaker unit at a predetermined distance.

3. The external speaker for mobile phones according to claim 1, wherein the voice transmitted from the mobile phone to the speaker unit is amplified to a predetermined level in the mobile phone, prior to being output.

4. The external speaker for mobile phones according to claim 1, wherein the shielding plate is a magnet to guide a flow of leakage magnetic field leaking from the speaker unit

5. The external speaker for mobile phones according to claim 1 or 2, further comprising:
a protective cap housing a hook unit that is detachably seated in a hook seating hole provided on the upper casing part, and having a connector fitting hole to receive a part of the connector exposed to an outside of the upper casing part.

6. The external speaker for mobile phones according to claim 5, wherein the protective cap comprises:
a conical casing, with button holes provided on sidewalls of the conical casing so that push buttons of the hook unit are exposed to an outside through the button holes, and the connector fitting hole provided on a lower surface of the conical casing to receive the exposed part of the connector therein, and a connector support block for supporting the connector in the conical casing and hook support plates for supporting the hook unit, the connector support block and the hook support plates being horizontally provided on an inner surface of the conical casing at different heights;
the hook unit installed between the hook support plates while surrounding the connector support block in such a way that a hook of the hook unit is exposed to the outside, the hook outwardly extending from an end of the hook unit to be seated in a hook seating hole on the upper casing part, the push buttons provided on the sidewalls of the hook unit to allow a user to operate the hook unit, with spring support lugs provided on an inner surface of the hook unit to support a spring; and
the spring provided between the spring support lugs of the hook unit so that the hook unit elastically opens outward.

7. The external speaker for mobile phones according to claim 5, wherein locking holes are provided on the upper surface of the upper casing part, and locking protrusions are provided on the lower surface of the conical casing of the protective cap to be fitted into the locking holes.

8. The external speaker for mobile phones according to claim 5, wherein the conical casing of the protective cap has on an upper end thereof a structure to be coupled to fastening means.

## Patentansprüche

1. Externer Lautsprecher für Mobiltelefone, der zum Verhindern einer durch ein magnetisches Streufeld verursachten Störung eines Mobiltelefons vorgesehen ist, mit:
- einem Gehäuse (11), welches von einem unteren Bereich zu einem oberen Bereich desselben verjüngt ist und einen im Gehäuse ausgebildeten Raum aufweist, um darin eine Lautsprechereinheit (28) aufzunehmen;
- einer Anschlussteil-Aufnahmeöffnung (27), die so auf einer oberen Oberfläche des Gehäuses vorgesehen ist, dass ein Anschlussteil (13) darin aufnehmbar ist und einem Sprachauslass (12), der an einer Seitenwand des Gehäuses vorgesehen ist, um einen von der Lautsprechereinheit ausgegebenen Laut abzugeben;
- dem Anschlussteil (13), das in der Anschlussteil-Aufnahmeöffnung des Gehäuses derart aufgenommen ist, dass ein Teil des Anschlussteils außen liegt und lösbar mechanisch und elektrisch mit einem Mobiltelefon verbunden ist;
- der im Gehäuse vorgesehenen Lautsprechereinheit (28), die elektrisch mit einer Sprachausgabe-Station des Mobiltelefons durch das Anschlussteil verbunden ist und während des Anrufens die Sprache emittiert; und
- einer Abschirmplatte (30,32), die im Gehäuse vorgesehen und oberhalb und/oder unterhalb der Lautsprechereinheit positionierbar ist und die vor dem aus der Lautsprechereinheit austretenden Magnetfeld schützt.

2. Externer Lautsprecher für Mobiltelefone nach Anspruch 1, wobei das Gehäuse aufweist:
- einen oberen Gehäuseteil, der auf einer oberen Fläche die Anschlussteil-Aufnahmeöffnung aufweist, um eine Aufnahme des Anschlussteils darin zu ermöglichen, mit einer auf einem unteren Teil einer inneren Fläche des oberen Gehäuseteils vorgesehenen Stützstufe zum Lagern der in dem Gehäuse vorgesehenen Lautsprechereinheit und mit einer Abschirmplatte, die an einem oberen Bereich innerhalb des oberen Gehäuseteils angebracht ist und die von einem oberen Ende der Lautsprechereinheit um einen vorgegebenen Abstand beabstandet ist;
- einen mittleren Gehäuseteil, der mit einem äußeren Rand des oberen Gehäuseteils gekoppelt ist, um eine Verbindung mit dem oberen Gehäuseteil herzustellen, mit einer von einer inneren Fläche des mittleren Gehäuseteils nach innen vorstehenden Lautsprecherauflagefläche zum Lagern eines äußeren Rands der in dem oberen Gehäuseteil vorgesehenen Lautsprechereinheit; und
- einen unteren Gehäuseteil, der zur Bildung des Sprachauslasses zum Emittieren von Lauten zwischen dem unteren Gehäuseteil und dem mittleren Gehäuseteil an einen äußeren Rand des mittleren Gehäuseteils gekoppelt ist und mit einer Abschirmplatte, die so an einer inneren Fläche des unteren Gehäuseteils angebracht ist, dass sie um einen vorgegebenen Abstand von einem Boden der Lautsprechereinheit beabstandet ist.

3. Externer Lautsprecher für Mobiltelefone nach Anspruch 1, wobei die von dem Mobiltelefon zu der Lautsprechereinheit übertragene Sprache vor der Ausgabe auf ein vorgegebenes Niveau im Mobiltelefon verstärkt wird.

4. Externer Lautsprecher für Mobiltelefone nach Anspruch 1, wobei die Abschirmplatte ein Magnet zum Leiten eines Flusses eines magnetischen, aus der Lautsprechereinheit austretenden Streufelds ist.

5. Externer Lautsprecher für Mobiltelefone nach Anspruch 1 oder 2, ferner enthaltend: eine eine Aufhängeeinheit einhausende Schutzabdeckung, wobei die Aufhängeeinheit lösbar in einer auf dem oberen Gehäuseteil vorgesehenen Aufnahmeausnehmung für die Aufhängeeinheit aufgenommen ist und mit einer Anschlussteil-Halteöffnung zum Aufnehmen eines Teils des Anschlussteils, das außerhalb des oberen Gehäuseteils liegt, versehen ist.

6. Externer Lautsprecher für Mobiltelefone nach Anspruch 5, wobei die Schutzabdeckung aufweist:
- ein konisches Gehäuse, wobei auf Seitenwänden des konischen Gehäuses Tastenlöcher so vorgesehen sind, dass Drucktasten der Aufhängeeinheit durch die Tastenlöcher nach außen ausgestellt sind, wobei auf einer unteren Fläche des konischen Gehäuses die Anschlussteil-Halteöffnung zum Aufnehmen des nach außen vorspringenden Teils des Anschlussteils vorgesehen ist, wobei ein Stützblock für das Anschlussteil zum Abstützen des Anschlussteils im konischen Gehäuse und Aufnahmeplatten für die Aufhängeeinheit zum Lagern der Aufhängeeinheit vorgesehen sind, und wobei der Stützblock für das Anschlussteil und die Aufnahmeplatten für die Aufhängeeinheit horizontal an einer inneren Fläche des konischen Gehäuses in unterschiedlichen Höhen angeordnet sind;
- die Aufhängeeinheit, die zwischen den Aufnahmeplatten für die Aufhängeeinheit so montiert ist, dass der Stützblock für das Anschlussteil derart umschlossen wird, dass ein Haken der Aufhängeeinheit nach außen vorsteht, wobei der Haken sich von einem Ende der Aufhängeeinheit nach außen erstreckt und in einer Aufnahmeausnehmung für die Aufhängeeinheit in dem oberen Gehäuseteil aufnehmbar ist, wobei die Druckknöpfe an den Seitenwänden der Aufhängeeinheit vorgesehen sind, um einem Anwender die Bedienung der Aufhängeeinheit zu ermöglichen, und wobei auf einer inneren Fläche der Aufhängeeinheit Federaufnahmenasen zum Lagern einer Feder vorgesehen sind; und
- die Feder, die so zwischen den Federaufnahmenasen der Aufhängeeinheit angeordnet ist, dass die Aufhängeeinheit sich nach außen elastisch öffnet.

7. Externer Lautsprecher für Mobiltelefone nach Anspruch 5, wobei Rastausnehmungen an der oberen Fläche des oberen Gehäuseteils und Rastvorsprünge an der unteren Fläche des konischen Gehäuses der Schutzabdeckung vorgesehen sind, die in die Rastausnehmungen einsteckbar sind.

8. Externer Lautsprecher für Mobiltelefone nach Anspruch 5, wobei das konische Gehäuse der Schutzabdeckung auf seinem oberen Ende eine Struktur besitzt, um mit Befestigungsmitteln verbunden zu werden.

## Revendications

1. - Ecouteur externe pour téléphones mobiles conçu de façon à ne pas perturber leur fonctionnement du fait de fuites magnétiques, comprenant:
- un boîtier 11 ayant une section inférieure étroite s'évasant vers le haut pour recevoir un écouteur 28 ;
- un orifice 27 pour connecteur prévu sur une surface supérieure du boîtier pour loger un connecteur 13, et une ouïe 12 disposée sur un côté du boîtier pour permettre le passage du son en provenance de l'écouteur;
- le connecteur 13 disposé dans l'orifice du boîtier de façon à ce qu'une partie du connecteur soit accessible par l'extérieur, permettant ainsi une connexion mécanique et électrique amovible avec un téléphone mobile ;
- l'écouteur 28 monté dans le boîtier et raccordé électriquement par le connecteur avec la sortie son d'un téléphone mobile de façon à permettre d'écouter les appels ; et
- une plaque de blindage 3 0, 32 montée dans le boîtier et disposée en dessus et/ou en dessous du haut-parleur afin d'assurer une protection contre le champ magnétique qu'il produit.

2. - Ecouteur externe pour téléphones mobiles selon la revendication 1, où le boîtier comprend :
une partie supérieure du boîtier dont la surface supérieure présente l'orifice pour connecteur permettant le montage du connecteur, et dont la partie inférieure présente à l'intérieur un redan faisant fonction d'appui pour l'écouteur; une plaque de blindage montée dans le haut de cette partie supérieure à une distance donnée au-dessus de l'écouteur ;
une partie médiane du boîtier se montant sur le pourtour inférieur de la partie supérieure et constituant avec elle un espace commun, avec un siège pour l'écouteur constitué d'un rebord en saillie vers l'intérieur de cette partie médiane afin de soutenir le rebord inférieur de l'écouteur monté dans la partie supérieure du boîtier ; et
une partie inférieure du boîtier se montant sur le pourtour inférieur de la partie médiane et définissant une ouïe permettant d'émettre le son entre la partie médiane et la partie inférieure, avec une plaque de blindage fixée à une surface à l'intérieur de cette partie inférieure à une distance donnée du bas du haut-parleur.

3. - Ecouteur externe pour téléphones mobiles selon la revendication 1, où la voix transmise du téléphone à l'écouteur est amplifiée dans le téléphone à un niveau donné avant sortie.

4. - Ecouteur externe pour téléphones mobiles selon la revendication 1, où la plaque de blindage est un aimant guidant le flux de fuite magnétique émanant du haut-parleur.

5. - Ecouteur externe pour téléphones mobiles selon la revendication 1 ou 2, comprenant en outre :
un capuchon protecteur sous lequel se trouve un module crochet amovible placé dans un logement prévu à cet effet sur la partie supérieure du boîtier, et présentant un orifice prévu pour permettre la fixation d'un connecteur et pour rendre ce connecteur accessible.

6. - Ecouteur externe pour téléphones mobiles selon la revendication 5, où le capuchon protecteur comprend :
un boîtier conique, lequel est doté sur ses côtés d'orifices prévus pour donner accès aux boutons-poussoirs du module crochet ; d'un orifice sur la surface inférieure du boîtier destiné à la fixation du connecteur et à le rendre accessible ; d'un bloc d'appui du connecteur et de platines d'appui du module crochet, bloc et platines étant disposés horizontalement à des niveaux différents à l'intérieur du boîtier conique ;
le module crochet disposé entre ses platines d'appui tout en entourant le bloc d'appui du connecteur de façon à ce que le crochet du module crochet apparaisse à l'extérieur à l'extrémité du module crochet en place dans son logement sur la partie supérieure du boîtier, les boutons disposés sur les côtés du module crochet en permettant l'utilisation, avec des ergots de fixation de ressort prévus sur la surface interne du module crochet pour recevoir un ressort ; et
le ressort prévu entre les ergots du module crochet pour que celui-ci s'ouvre élastiquement vers l'extérieur.

7. - Ecouteur externe pour téléphones mobiles selon la revendication 5, avec des crans de verrouillage disposés sur la surface supérieure de la partie supérieure du boîtier, et des ergots de verrouillage sur la surface inférieure du boîtier conique du capuchon protecteur prévus pour s'y insérer.

8. - Ecouteur externe pour téléphones mobiles selon la revendication 5 où le boîtier conique du capuchon protecteur présente à son extrémité supérieure une structure destinée à s'accoupler avec un moyen de fixation.
